# EUROPÄISCHE PATENTSCHRIFT

(11) **EP 0 591 222 B1**
(45) Veröffentlichungstag und Bekanntmachung des Hinweises auf die Patenterteilung: **15.11.1995**
(21) Anmeldenummer: 92906576.1
(22) Anmeldetag: 14.03.1992
(51) Int. Cl.: B23C 5/10, B23C 5/26

(54) **WALZENSTIRNFRÄSER**
PLAIN MILLING CUTTER
FRAISE A BOUT

(30) Priorität: 31.05.1991 DE 4117900
(43) Veröffentlichungstag der Anmeldung: 13.04.1994
(73) Patentinhaber: KOMET Präzisionswerkzeuge Robert Breuning GmbH, D-74354 Besigheim (DE)
(72) Erfinder: DUTSCHKE, Bernd, D-7143 Vaihingen/Enz-Kleinglattbach (DE); SEIBEL, Wolfgang, D-7122 Besigheim (DE)
(74) Vertreter: Wolf, Eckhard, Dr.-Ing.
(86) Internationale Anmeldenummer: EP9200568
(87) Internationale Veröffentlichungsnummer: WO9221471

(56) Entgegenhaltungen:
- DE-A- 3 314 049
- DE-A- 3 812 150
- DE-U- 8 908 481
- WERKSTATTSTECHNIK Bd. 1984, Nr. 2, Februar 1984, WÜRZBURG DE Seiten 73 - 76; MÜLLER: 'Zerspankraftkomponenten und ihre Einflussgrössen beim Fräsen'

## Beschreibung

Die Erfindung betrifft einen Walzenstirnfräser mit einem Aufnahmeteil, einem mit dem Aufnahmeteil verbundenen walzenförmigen Schneidenteil, mindestens zwei im Schneidenteil angeordneten, in Umfangsrichtung einen Abstand voneinander aufweisenden gewendelten Spannuten und je einer Reihe von längs einer Spannutflanke hintereinander angeordneten, je eine im wesentlichen radial ausgerichtete Bodenabstützfläche und eine diese auf der Seite des Nutengrundes radial begrenzende Seitenabstützfläche aufweisenden Plattensitzen zur Aufnahme von mittels einer zentralen, in eine Schraubbohrung im Bereich der Bodenabstützfläche eingreifenden Klemmschraube am Schneidenteil befestigbaren, vorzugsweise als Wendeschneidplatten ausgebildeten, im Umriß im wesentlichen viereckigen Schneidplatten in an ihren einander zugewandten Enden paarweise axial überlappender Anordnung, welche Schneidplatten mit einer Hauptschneide und einer an diese anschließenden Freifläche radial über den Umfang des Schneidenteils überstehen, wobei die stirnseitig äußersten Schneidplatten einer jeden Schneidplattenreihe mit einer Stirnschneide und einer an diese anschließenden Freifläche axial über den Schneidenteil überstehen, und wobei die hinter der stirnseitig äußersten Schneidplatte angeordneten inneren Schneidplatten einer jeden Schneidplattenreihe mit einer aufnahmeseitig angeordneten wirksamen Schneide und einer an diese anschließenden Freifläche widerlagerfrei axial über den zugehörigen Plattensitz überstehen.

Bei Walzenfräsern mit vollschneidenden Schneidplattenreihen ist bei den hinter der stirnseitig äußersten Schneidplatte angeordneten inneren Schneidplatten üblicherweise die aufnahmeseitig angeordnete Schneide wirksam, während die stirnseitig angeordnete Schneide durch die benachbarte wirksame Schneide verdeckt und daher unwirksam ist. Um die auf die Schneidplatten einwirkenden axialen Schnittkraftkomponenten aufnehmen zu können, wurden die inneren Schneidplatten daher stirnseitig gegen eine axiale Widerlagerfläche abgestützt (DE-A-38 12 150). Zur Herstellung eines Plattensitzes mit axialer Widerlagerfläche ist jedoch ein erheblicher Fertigungsaufwand erforderlich. Der Plattenboden muß dort im Hinblick auf die gleichzeitig einzubringende axiale Widerlagerfläche mit einem Stirnfräser eingebracht werden, der wegen den tiefen Bearbeitungspositionen eine relativ große Auskraglänge erfordert und der zur Vermeidung von Kollisionen mit benachbarten Störkanten nur mit relativ schmalen Werkzeugaufnahmen arbeiten kann. Dadurch lassen sowohl die Bearbeitungsgenauigkeit als auch die Bearbeitungsgeschwindigkeit zu wünschen übrig. Weiter ist bei den bekannten Walzenstirnfräsern der Schneidenteil üblicherweise einstückig mit dem Aufnahmeteil verbunden, so daß für verschiedene Fräsergrößen und Aufnahmeausbildungen eine umfangreiche Lagerhaltung notwendig ist.

Der Erfindung liegt die Aufgabe zugrunde, einen Walzenstirnfräser der eingangs angegebenen Art zu entwickeln, der einfach und rationell herstellbar ist und trotzdem in funktioneller Hinsicht hohen Anforderungen entspricht.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den Unteransprüchen.

Die erfindungsgemäße Lösung geht im wesentlichen von dem Gedanken aus, daß die inneren Schneidplatten mit ihrer stirnseitig angeordneten unwirksamen Schneide und einer an diese anschließenden Freifläche widerlagerfrei axial in einen durch eine Hinterschneidung des benachbarten Plattensitzes gebildeten Freiraum hinter der stirnseitig benachbarten Schneidplatte eingreifen. Mit diesen Maßnahmen ist es möglich, die Plattensitze durch Walzfräsen herzustellen (und nicht wie bisher durch Stirnfräsen): Nachdem zuvor die gewendelten Spannuten mit einem Schaftfräser eingebracht und die plattenseitigen Nutenflanken durch Walzfräsen für die Einbringung der Plattensitze vorbereitet wurden, werden die Bodenabstützflächen und die Hinterschneidungen zur Aufnahme der stirnseitigen Schneiden in einem Zuge nacheinander mit einem Schaftfräser im Walzfräsverfahren eingebracht. Dadurch wird die Fertigungsgeschwindigkeit bei der Herstellung der Plattensitze um mindestens den Faktor 3 vergrößert, was bei der Vielzahl der in einem Walzenfräser enthaltenen Plattensitze in fertigungstechnischer Hinsicht einen erheblichen Fortschritt bedeutet.

Um eine ungewollte axiale Verschiebung der Schneidplatten trotz der fehlenden axialen Widerlagerflächen zu vermeiden, muß einmal dafür gesorgt werden, daß die Schneidplatten mit Hilfe der zentralen Klemmschraube ausreichend kraftschlüssig gegen die Bodenabstützfläche und die Seitenabstützfläche angepreßt wird. Letzteres ist dadurch möglich, daß der Achsahstand der Schraubenbohrung von der Seitenabstützfläche gegenüber dem betreffenden Maß der Schneidplatte ein Untermaß von 0,1 bis 0,2 mm aufweist.

Weiter kann durch konstruktive Maßnahmen dafür gesorgt werden, daß sich die Axialkomponenten der an der Platte angreifenden Schnittkräfte weitgehend gegeneinander aufheben. Um dies zu erreichen, wird gemäß einer bevorzugten Ausgestaltung der Erfindung vorgeschlagen, daß die Bodenabstützfläche des Plattensitzes und die Hauptschneide der zugehörigen Schneidplatte einen zur Aufnahmeseite hin konvergierenden spitzen Winkel miteinander einschließen.

Eine weitere Verbesserung in dieser Hinsicht kann dadurch erreicht werden, daß die Seitenabstützfläche in zwei im Abstand voneinander angeordnete, eine Zweipunktanlage definierende Flächenteile unterteilt ist und daß gemäß einer weiteren bevorzugten Ausgestaltung der Erfindung die gegen die Seitenabstützfläche anliegende Seitenfläche der Schneidplatte leicht gekrümmt oder facettiert ist und dadurch form- und kraftschlüssig gegen die in diesem Falle räumlich unterschiedlich ausgerichteten Flächenteile angepreßt wird.

Zur Verminderung der Lagerhaltung ist es von besonderem Vorteil, wenn der Schneidenteil und der Aufnahmenteil des Walzenfräsers lösbar und austauschbar miteinander verbunden sind und wenn gegebenenfalls zusätzlich der Schneidenteil aus einem stirnseitig angeordneten Stirnschneidenteil und einem aufnahmeseitig angeordneten Walzenteil besteht, die ebenfalls lösbar miteinander verbunden sind. Mit diesen Maßnahmen ist es möglich, die gleichen Schneidenteile bei Bedarf mit unterschiedlichen Aufnahmeteilen zu versehen und unterschiedlich lange Schneidenteile zusammenzusetzen. Die Stirnschneidenteile weisen dabei zweckmäßig zwei Schneidplatten je Schneidplattenreihe auf, während die Walzenteile mindestens zwei, vorzugsweise drei bis sechs Schneidplatten je Schneidplattenreihe aufweisen. Grundsätzlich ist es auch möglich, das Walzenteil als vorzugsweise mit auslaufenden Spannuten versehenes, schneidenloses Verlängerungs- oder Reduzierstück auszubilden. Der Schneidenteil und der Aufnahmeteil werden dabei durch Kupplungsorgane form- und kraftschlüssig miteinander verbunden. Zwischen dem Schneidenteil und dem Aufnahmeteil kann zusätzlich ein Adapterstück zur gegenseitigen Anpassung unterschiedlich dimensionierter Kupplungsorgane an den Schneiden- und Aufnahmeteilen angeordnet werden, so daß auch unterschiedlich große Schneiden- und Aufnahmeteile miteinander kombiniert werden können, was zu einer weiteren Reduzierung in der Lagerhaltung führt.

Die Kupplungsorgane können beispielsweise durch mindestens zwei einen definierten Winkelabstand voneinander aufweisende axiale Mitnehmerstifte einerseits und entsprechend angeordnete Paßbohrungen zur Aufnahme der Mitnehmerstifte andererseits gebildet sein. Die kraftschlüssige Verbindung kann durch eine durch den Schneidenteil hindurchgreifende, in eine Gewindebohrung des Aufnahmeteils eingreifende Spannschraube hergestellt werden.

Gemäß einer weiteren vorteilhaften Ausgestaltung der Erfindung sind die Kupplungsorgane als über das aufnahmeseitige Ende des Schneidenteils über eine Planfläche überstehende, in eine von einer ebenen Gegenfläche begrenzte Quernut des Aufnahmeteils einführbare und dort mittels Spannschrauben festklemmbare Querrippe und als in ein zentrales Paßlochs des Aufnahmeteils einsteckbarer, über die Querrippe achszentral überstehender Zentrierzapfen ausgebildet. Zur Herstellung der Klemmverbindung sind in zwei einander gegenüberliegenden, zur Planfläche senkrechten Begrenzungsflächen der Querrippe konische Vertiefungen in Längsrichtung der Querrippe gegeneinander versetzt angeordnet, in die eine in einer Gewindebohrung des Aufnahmeteils geführte, durch Flanken der Quernut hindurchgreifende Schraube mit ihrer konischen Spitze mit einem solchen Achsversatz eindrehbar ist, daß der Schneidenteil und der Aufnahmeteil an ihren einander zugewandten Planflächen axial gegeneinander gepreßt werden. Dieses Verbindungsprinzip kann auch zwischen dem Stirnschneidenteil und dem Walzenteil eingesetzt werden. Weiter können in kinematischer Umkehrung auch die Querrippe und der Zentrierzapfen einerseits und die Quernut und das Paßloch andererseits gegeneinander vertauscht angeordnet werden.

Im folgenden wird die Erfindung anhand der in der Zeichnung in schematischer Weise dargestellten Ausführungsbeispiele näher erläutert. Es zeigen
- Fig. 1 a bis e: einen modular aufgebauten Walzenstirnfräser in einer teilweise geschnittenen Seitenansicht, einer teilweise geschnittenen Stirnseitenansicht, einem Ausschnitt entlang der Schnittlinie C-C der Fig. 1b und je einer Ansicht entlang den Trennlinien D-D und E-E der Fig. 1a;
- Fig. 2: eine Seitenansicht des Stirnschneidenteils des Walzenstirnfräsers in teilweise geschnittener Darstellung;

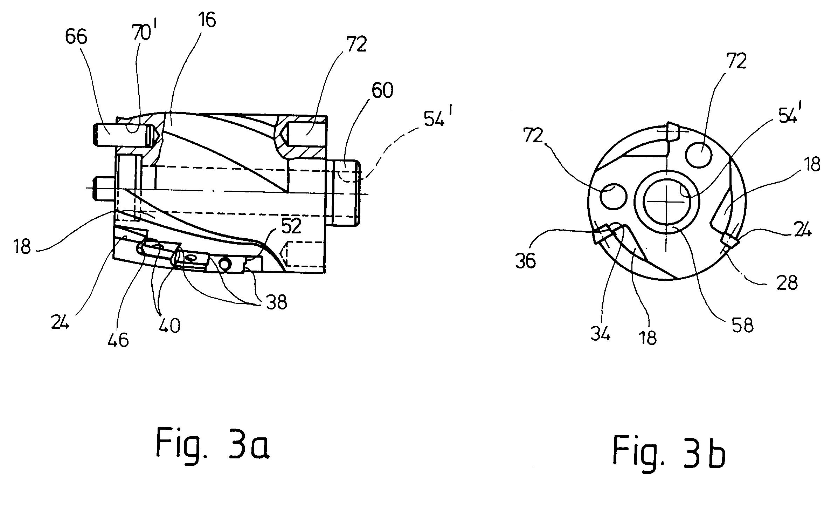

- Fig. 3 a und b: eine Seitenansicht und eine Draufsicht des Walzenteils des Walzenstirnfräsers in teilweise geschnittener Darstellung;
- Fig. 4: ein Schema für den modularen Aufbau unterschiedlicher Walzenstirnfräser aus unterschiedlichen Grundbauteilen.

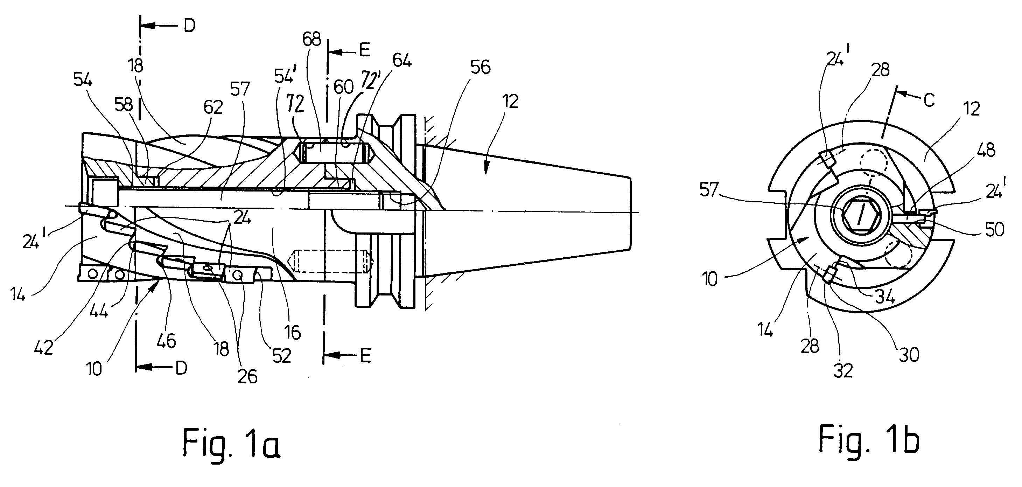

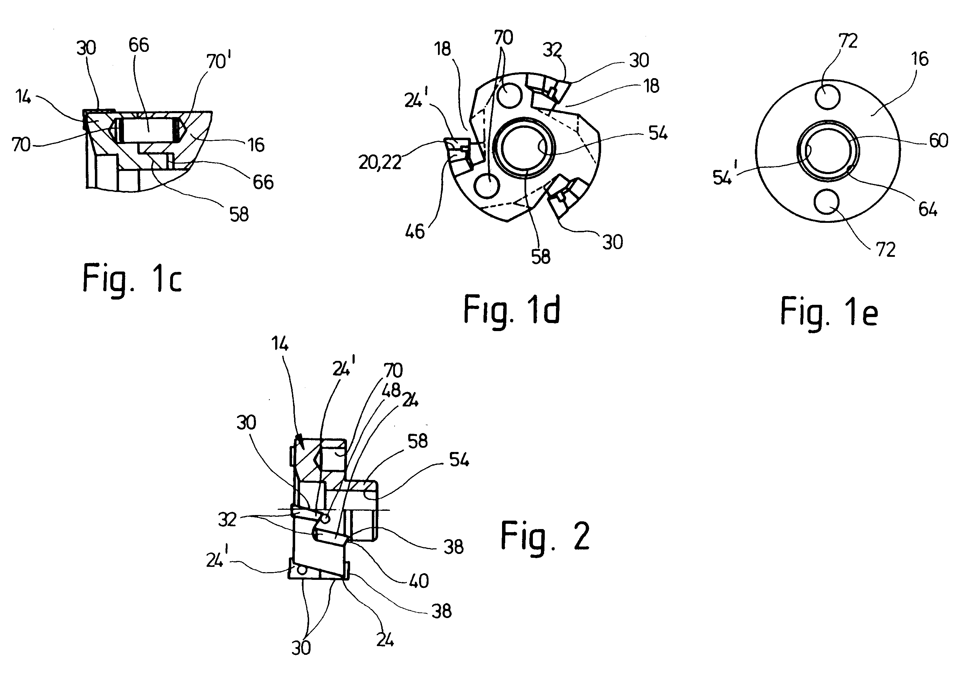

Der modular aufgebaute Walzenstirnfräser besteht im wesentlichen aus einem Schneidenteil 10 und einem mit diesem lösbar verbundenen Aufnahmeteil 12, wobei der Schneidenteil 10 seinerseits unterteilt ist in ein Stirnschneidenteil 14 und ein Walzenteil 16. Der Schneidenteil 10 enthält drei im Winkelabstand voneinander angeordnete gewendelte Spannuten 18, die sich vom Stirnschneidenteil 14 zum Walzenteil 16 erstrecken und in deren einen, in Rechtsdrehrichtung rückwärtigen Nutenflanke Plattensitze 20 mit im wesentlichen radial ausgerichteten Bodenabstützflächen 22 angeordnet sind. Die stufenförmig angeordneten Plattensitze 20 sind zur Aufnahme von im Umriß im wesentlichen viereckigen Wendeschneidplatten 24 bestimmt, die mit einer zentralen Klemmschraube 26 in einer die Bodenabstützfläche senkrecht durchgreifenden Schraubbohrung 28 am Schneidenteil 10 befestigt sind. Die Wendeschneidplatten 24 stehen mit ihrer schräg in Richtung Spannut verlaufenden Hauptschneide 30 und ihrer daran angrenzenden Freifläche 32 radial über den walzenförmigen Umfang des Schneidenteils 10 über und liegen mit ihrer der Freifläche 32 gegenüberliegenden Seitenfläche 34 gegen eine Seitenabstützfläche 36 an. Die Seitenabstützfläche 36 besteht aus zwei im Abstand voneinander angeordneten, in der Zeichnung nicht erkennbaren Flächenteilen, die eine zuverlässige Zweipunktanlage der Seitenfläche 34 gewährleistet. Der Abstand zwischen der Schraubbohrung 28 und der Seitenabstützfläche 36 weist gegenüber dem entsprechenden Abstand in der Wendeschneidplatte ein kleines Untermaß von 0,1 bis 0,2 mm auf, so daß beim Anziehen der Klemmschraube 26 ein Klemmsitz erhalten wird. Da die Seitenfläche 34 der Wendeschneidplatte 24 in Längsrichtung gekrümmt oder facettiert ist und die Flächenteile der Seitenabstützfläche 36 einen entsprechenden stumpfen Winkel miteinander einschließen, wird beim Anpressen der Wendeschneidplatte gegen die Seitenabstützfläche 36 zusätzlich ein Formschluß erzielt, der auf die Wendeschneidplatte einwirkende resultierende axiale Schnittkräfte aufzunehmen vermag. Wie beispielsweise aus Fig. 1a zu ersehen ist, schließt die Hauptschneide 30 der Wendeschneidplatten 24 mit der Bodenabstützfläche einen zur Aufnahmeseite hin konvergierenden spitzen Winkel ein, der zu einer Reduktion der auf die Wendeschneidplatten wirkenden axialen Schnittkraftkomponente führt.

Die hinter der stirnseitig äußersten Schneidplatte 24' angeordneten inneren Wendeschneidplatten einer jeden Schneidplattenreihe steht mit ihrer aufnahmeseitig angeordneten wirksamen Nebenschneide 38 und der an diese anschließenden Freifläche 40 widerlagerfrei über den zugehörigen Plattensitz 20 über, während sie mit ihrer stirnseitig angeordneten unwirksamen Schneide 42 und der an diese anschließenden Freifläche 44 widerlagerfrei in einen durch eine Hinterschneidung 46 gebildeten Freiraum hinter der stirnseitig benachbarten Schneidplatte 24 eingreifen. Die Anordnung ist dabei so getroffen, daß sich die an den Wendeschneidplatten 24 angreifenden axialen Schnittkräfte im wesentlichen kompensieren. Dadurch hat sich eine axiale Abstützung als entbehrlich erwiesen. Eine axiale Abstützung ist lediglich an der stirnseitig äußersten Schneidplatte 24' einer jeden Schneidplattenreihe erforderlich, da diese mit ihrer stirnseitigen Schneidkante 42 und der anschließenden Freifläche 44 axial über den Schneidenteil 10 übersteht und über diese mit in Richtung Aufnahme wirkenden axialen Schnittkräften beaufschlagt ist. Zur Axialabstützung der stirnseitig äußersten Wendeschneidplatten 24' ist jeweils ein Zylinderstift 48 vorgesehen, der in definiertem Abstand von der Stirnfläche in eine Bohrung 50 des Stirnschneidenteils eingesetzt ist. Die Wendeschneidplatte 24' liegt mit einem angeschliffenen Abschnitt 52 gegen den Zylinderstift 48 an, so daß die einen definierten Abstand von dem angeschliffenen Abschnitt 52 aufweisende, ebenfalls angeschliffene Stirnschneide 42 mit hoher Maßgenauigkeit am Stirnschneidenteil angeordnet werden kann.

Trotz der komplizierten Plattenform können die Plattensitze im Bereich der Bodenabstützflächen 22 und der sich daran anschließenden Hinterschneidungen 46 stufenweise durch Walzfräsen in die Nutenflanke mit hoher Vorschubgeschwindigkeit eingebracht werden. Auch die hierfür erforderliche Vorarbeit in der Spannutflanke läßt sich durch Walzfräsen rationell durchführen. Bei der Vielzahl der einzubringenden Plattensitze ist dieser Fertigungsvorteil von besonderer Bedeutung.

Die Verbindung zwischen Stirnschneidenteil 14, Walzenteil 16 und Aufnahmeteil 12 erfolgt mit Hilfe einer durch eine Zentralbohrung 54,54' im Stirnschneidenteil 14 und Walzenteil 16 hindurchgreifenden und in eine Gewindebohrung 56 des Aufnahmeteils eindrehbaren Spannschraube 57, wobei die gegenseitige Zentrierung durch Paßzapfen 58,60 erfolgt, die in entsprechende Paßbohrungen 62,64 des benachbarten Teils eingreifen. Die Drehmitnahme erfolgt über achsparallel ausgerichtete, exzentrisch angeordnete Zylinderstifte 66,68, die in entsprechende Bohrungen 70,70' bzw. 72,72' der miteinander zu verbindenden Teile eingreifen.

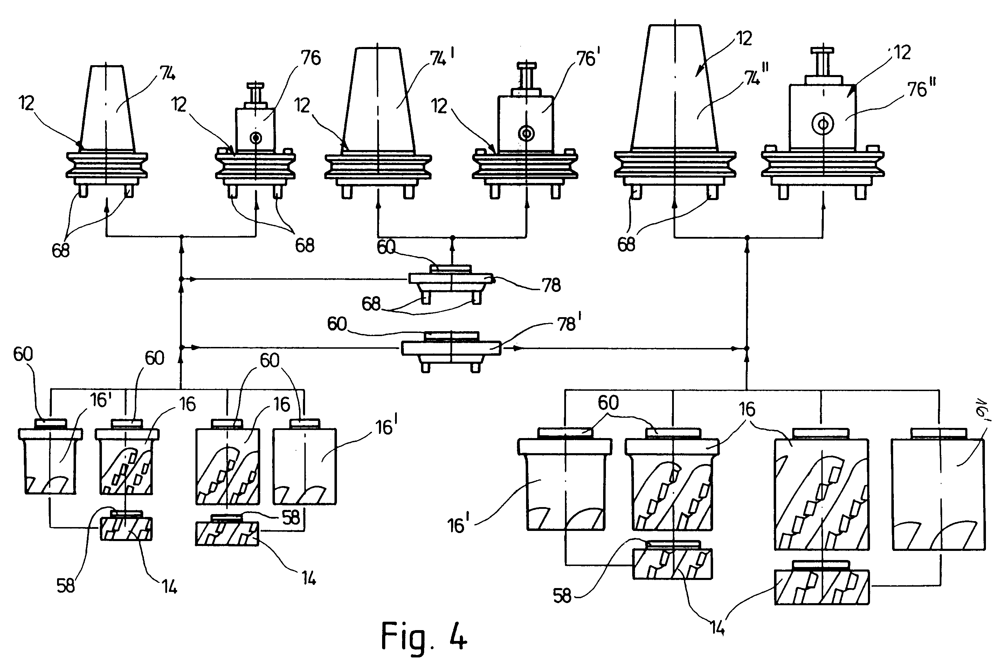

Bei dem in Fig. 1a gezeigten Ausführungsbeispiel ist der Aufnahmteil 12 als Steilkegel ausgebildet. Wie aus Fig. 4 zu ersehen ist, können statt der dort gezeigten, verschieden großen Steilkegelaufnahmen 74,74',74'' auch andere Grundaufnahmen, wie eine Paßzapfen/Planflächenkupplung 76,76',76'', eine nicht dargestellte Morsekegelkupplung oder eine nicht dargestellte Flanschkupplung verwendet werden. Maßgeblich ist hierbei nur, daß auf der Seite des Schneidenteils 10 die passenden Kupplungsorgane, wie die Zylinderstifte 68 oder die Paßbohrungen 64 vorgesehen sind. Auch der Anschluß kleinerer Schneidenteile 10 an größere Aufnahmeteile 12 ist grundsätzlich unter Zwischenschaltung von geeigneten Adaptern 78,78' möglich, die eine Anpassung der unterschiedlichen Anschlußmaße der genannten Kupplungsorgane bewirken und als relativ einfache, scheibenförmige Zwischenstücke ausgebildet sein können.

Bei Bedarf können statt der mit Wendeschneidplatten 24 bestückten Walzenteile 16 auch plattenfreie Walzenteile 16' mit der Funktion eines Verlängerungs- oder Reduzierstücks eingesetzt werden, die an ihrer Oberfläche lediglich mit auslaufenden Spannuten 18 versehen sind. Die Darstellung in Fig. 4 verdeutlicht also, daß der modulare Aufbau des Walzenstirnfräsers eine Vielzahl von Kombinationen von verschiedenen Aufnahmeteilen 12, Walzenteilen 16,16' und Stirnschneidenteilen 14 ermöglicht, die unter Zwischenschaltung von Adaptern 78,78' auch bei unterschiedlichen Größen miteinander kombinierbar sind. Die dadurch erzielbaren Vorteile bei der Lagerhaltung sind offensichtlich.

Zusammenfassend ist folgendes festzustellen: Die Erfindung betrifft einen Walzenstirnfräser mit einem Aufnahmeteil 12, einem mit dem Aufnahmeteil 12 lösbar verbundenen, seinerseits zweiteiligen walzenförmigen Schneidenteil 10, mindestens zwei im Schneidenteil 10 angeordneten, im Umfangsrichtung einen Abstand voneinander aufweisenden gewendelten Spannuten 18 und je einer Reihe von längs einer Spannutenflanke hintereinander angeordneten, je eine im wesentlichen radial ausgerichtete Bodenabstützfläche 22 und eine diese auf der Seite des Nutengrundes radial begrenzende Seitenabstützfläche aufweisenden Plattensitzen 20 zur Aufnahme von Wendeschneidplatten 24 in einander paarweise axial überlappender Anordnung. Die hinter der stirnseitig äußersten Wendeschneidplatte 24' angeordneten inneren Schneidplatten 24 sind axial widerlagerfrei an den Plattensitzen eingespannt. Insbesondere greifen die inneren Schneidplatten 24 mit ihrer stirnseitigen unwirksamen Schneide 42 in eine Hinterschneidung 46 des benachbarten Plattensitzes widerlagerfrei ein. Mit dieser Konstruktion ist es möglich, die Bodenabstützflächen 22 der Plattensitze und die an diese aufnahmeseitig anschließenden Hinterschneidungen 46 besonders einfach und rationell durch Walzfräsen in das Schneidenteil 10 einzubringen.

## Patentansprüche

1. Walzenstirnfräser mit einem Aufnahmeteil (12), einem mit dem Aufnahmeteil verbundenen walzenförmigen Schneidenteil (10), mindestens zwei im Schneidenteil angeordneten, in Umfangsrichtung einen Abstand voneinander aufweisenden gewendelten Spannuten (18) und je einer Reihe von längs einer Spannutflanke hintereinander angeordneten, je eine im wesentlichen radial ausgerichtete Bodenabstützfläche (22) und eine diese auf der Seite des Nutengrundes radial begrenzende Seitenabstützfläche (36) aufweisenden Plattensitzen (20) zur Aufnahme von mittels einer zentralen, in eine Schraubbohrung (28) im Bereich der Bodenabstützfläche (22) eingreifenden Klemmschraube (26) am Schneidenteil (10) befestigbaren, vorzugsweise als Wendeschneidplatten ausgebildeten, im Umriß im wesentlichen viereckigen Schneidplatten (24,24') in an ihren einander zugewandten Enden paarweise axial überlappender Anordnung, welche Schneidplatten (24,24') mit einer Hauptschneide (30) und einer an diese anschließenden Freifläche (32) radial über den Umfang des Schneidenteils (10) überstehen, wobei die stirnseitig äußersten Schneidplatten (24') einer jeden Schneidplattenreihe mit einer Stirnschneide (42) und einer an diese anschließenden Freifläche (44) axial über den Schneidenteil (10) überstehen, und wobei die hinter der stirnseitig äußersten Schneidplatte (24') angeordneten inneren Schneidplatten (24) einer jeden Schneidplattenreihe mit einer aufnahmeseitig angeordneten wirksamen Schneide (38) und einer an diese anschließenden Freifläche (40) widerlagerfrei axial über den zugehörigen Plattensitz (20) überstehen, **dadurch gekennzeichnet**, daß die inneren Schneidplatten (24) mit ihrer stirnseitig angeordneten unwirksamen Schneide (42) und einer an diese anschließenden Freifläche (44) widerlagerfrei axial in einen durch eine Hinterschneidung des benachbarten Plattensitzes gebildeten Freiraum (46) hinter der stirnseitig benachbarten Schneidplatte (24,24') eingreifen.

2. Walzenstirnfräser nach Anspruch 1**, dadurch gekennzeichnet**, daß die stirnseitig äußerste Schneidplatte (24') einer jeden Schneidplattenreihe im Bereich ihrer aufnahmeseitigen Schneide (38) bzw. der an diese anschließenden Freifläche (40) an einem schneidenteilfesten axialen Widerlager (48) abgestützt ist.

3. Walzenstirnfräser nach Anspruch 2, **dadurch gekennzeichnet**, daß das Widerlager (48) als in den Schneidenteil (10) eingebetteter, mit dem einen Ende über den Nutengrund überstehender Zylinderstift (48) ausgebildet ist.

4. Walzenstirnfräser nach einem der Ansprüche 1 bis 3, **dadurch gekennzeichnet**, daß die Bodenabstützflächen (22) der Plattensitze (20) und die an diese aufnahmeseitig anschließenden Hinterschneidungen (46) des Schneidenteils (10) walzgefräst sind.

5. Walzenstirnfräser nach einem der Ansprüche 1 bis 4, **dadurch gekennzeichnet**, daß die Bodenabstützfläche (22) eines jeden Plattensitzes (20) und die Hauptschneide (30) der zugehörigen Schneidplatte (24,24') einen in Richtung Aufnahmeteil konvergierenden spitzen Winkel miteinander einschließen.

6. Walzenstirnfräser nach einem der Ansprüche 1 bis 5, **dadurch gekennzeichnet**, daß die Seitenabstützfläche (36) in zwei im Abstand voneinander angeordnete, eine Zweipunktanlage definierende Flächenteile unterteilt ist.

7. Walzenstirnfräser nach Anspruch 6, **dadurch gekennzeichnet**, daß die gegen die Seitenabstützfläche (36) anliegende Seitenfläche (34) bzw. Freifläche der Schneidplatte (24,24') leicht gekrümmt oder facettiert ist und form- und kraftschlüssig gegen die in Anpassung an die Krümmung oder Facettierung unterschiedlich ausgerichteten Flächenteile der Seitenabstützfläche (36) angepreßt ist.

8. Walzenstirnfräser nach einem der Ansprüche 1 bis 7, **dadurch gekennzeichnet**, daß der Achsabstand der Schraubbohrung (28) von der Seitenabstützfläche (36) gegenüber dem betreffenden Maß an der Schneidplatte (24,24') ein Untermaß von 0,1 bis 0,2 mm aufweist.

9. Walzenstirnfräser nach einem der Ansprüche 1 bis 8, **dadurch gekennzeichnet**, daß der Schneidenteil (10) und der Aufnahmeteil (12) lösbar und austauschbar miteinander verbunden sind.

10. Walzenstirnfräser nach einem der Ansprüche 1 bis 9, **dadurch gekennzeichnet,** daß der Schneidenteil (10) aus einem stirnseitig angeordneten Stirnschneidenteil (14) und einem aufnahmeseitig angeordneten Walzenteil (16,16') besteht, die lösbar miteinander verbunden sind.

11. Walzenstirnfräser nach Anspruch 10, **dadurch gekennzeichnet**, daß der Stirnschneidenteil (14) zwei Schneidplatten (24,24') je Schneidplattenreihe aufweist.

12. Walzenstirnfräser nach Anspruch 10 oder 11, **dadurch gekennzeichnet**, daß der Walzenteil (16) mindestens zwei, vorzugsweise drei bis sechs Schneidplatten (24) je Schneidplattenreihe aufweist.

13. Walzenstirnfräser nach Anspruch 10 oder 11, **dadurch gekennzeichnet**, daß der Walzenteil (16') als vorzugsweise mit auslaufenden Spannuten (18) versehenes, schneidenloses Verlängerungs- oder Reduzierstück ausgebildet ist.

14. Walzenstirnfräser nach einem der Ansprüche 9 bis 13, **dadurch gekennzeichnet,** daß der Schneidenteil (10) und der Aufnahmeteil (12) durch Kupplungsorgane form- und kraftschlüssig miteinander verbunden sind.

15. Walzenstirnfräser nach Anspruch 14, **dadurch gekennzeichnet**, daß zwischen Schneidenteil (10) und Aufnahmeteil (12) ein Adapter (78,78') zur gegenseitigen Anpassung unterschiedlich dimensionierter Kupplungsorgane an den Schneiden- und Aufnahmeteilen (10,12) angeordnet ist.

16. Walzenstirnfräser nach Anspruch 14 oder 15, **dadurch gekennzeichnet**, daß die Kupplungsorgane mindestens zwei einen definierten Winkelabstand voneinander aufweisende achsparallele Mitnehmerstifte (66,68) einerseits und Paßbohrungen (70,70';72,72') zur Aufnahme der Mitnehmerstifte (66,68) andererseits aufweisen.

17. Walzenstirnfräser nach Anspruch 15 oder 16, **dadurch gekennzeichnet**, daß die Kupplungsorgane eine durch den Schneidenteil (10) hindurchgreifende, in eine Gewindebohrung (56) des Aufnahmeteils (12) eingreifende Spannschraube (57) aufweisen.

18. Walzenstirnfräser nach einem der Ansprüche 15 bis 17, **dadurch gekennzeichnet**, daß die Kupplungsorgane einen am einen Teil axial überstehenden Zentrierzapfen (58,60) und eine am anderen Teil (16,12) angeordnete, den Zentrierzapfen (58,60) aufnehmende Paßbohrung (62,64) aufweisen.

19. Walzenstirnfräser nach Anspruch 15, **dadurch gekennzeichnet**, daß das eine Teil an seinem einen Ende eine über eine Planfläche überstehende, in eine von einer ebenen Gegenfläche begrenzte Quernut des anderen Teils einführbare und mittels Spannschrauben festklemmbare Querrippe sowie einen in ein zentrales Paßloch des anderen Teils einsteckbaren, über die Querrippe achszentral überstehenden Zentrierzapfen aufweist.

20. Walzenstirnfräser nach Anspruch 19, **dadurch gekennzeichnet**, daß in zwei einander gegenüberliegenden, zur Planfläche senkrechten Flanken der Querrippe konische Vertiefungen in Längsrichtung der Querrippe gegeneinander versetzt angeordnet sind, in die je eine in einer Gewindebohrung des anderen Teils geführte, durch die Flanken der Quernut hindurchgreifende Schraube mit einer konischen Spitze mit einem solchen Achsversatz eindrehbar ist, daß das eine und das andere Teil an ihren Planflächen axial gegeneinander gepreßt werden.

## Claims

1. A shell end mill comprising a holder (12), a cylindrical cutting section (10) connected to the holder, at least two helical chip grooves (18) arranged in the cutting section at a spacing from one another in the peripheral direction, and in each case one row of insert seats (20) which are arranged one after the other along one side of a chip groove and which each have a substantially radially aligned base support surface (22) and a side support surface (36) radially delimiting the latter on the side of the groove base for receiving cutting inserts (24, 24') which are preferably designed as indexable inserts, which can be fastened on the cutting section (10) by means of a central clamping screw (26) engaging in a screw bore (28) in the area of the base support surface (22) and which have a substantially rectangular outline, in an arrangement of axially overlapping pairs at the facing ends of the cutting inserts, the cutting inserts (24, 24') projecting radially over the periphery of the cutting section (10) with a main cutting edge (30) and a free surface (32) adjoining the latter, the front outermost cutting inserts (24') of each cutting insert row projecting axially over the cutting section (10) with a face cutting edge (42) and a free surface (44) adjoining the latter, and the inner cutting inserts (24), of each cutting insert row, disposed behind the front outermost cutting insert (24), projecting in an abutment-free manner axially over the associated insert seat (20) with an active cutting edge (38) disposed on the receiving side and with a free surface (40) adjoining the latter, characterized in that the inner cutting inserts (24) engage with their inactive cutting edge (42) arranged at the front and with a free surface (44) adjoining the latter cutting edge without abutment and axially in a free space (46) which is formed by an undercut in the adjacent insert seat and behind the cutting insert (24, 24') adjacent at the front.

2. Shell end cutter according to Claim 1, characterized in that the front outermost cutting insert (24') in each cutting insert row is supported in the region of its cutting edge (38) on the receiving side or of the free surface (40) adjoining this cutting edge on an axial abutment (48) which is rigid with the cutting section.

3. Shell end cutter according to Claim 2, characterized in that the abutment (48) is in the form of a cylinder pin (48) which is embedded in the cutting section (10) and projects with one end over the groove base.

4. Shell end cutter according to any one of Claims 1 to 3, characterized in that the base support surfaces (22) of the insert seats (20) and the undercuts (46), of the cutting section (10), adjoining the insert seats on the receiving side, are hob cut.

5. Shell end cutter according to any one of Claims 1 to 4, characterized in that the base support surface (22) of each insert seat (20) and the main cutting edge (30) of the associated cutting insert (24, 24') define with one another an acute angle diverging in the direction of the holder.

6. Shell end cutter according to any one of Claims 1 to 5, characterized in that the side support surface (36) is divided into two surface parts arranged at a spacing from one another and defining a two-point abutment.

7. Shell end cutter according to Claim 6, characterized in that the side surface (34), abutting the side support surface (36), or the free surface of the cutting insert (24, 24') is slightly curved or bevelled and is urged in an interlocking and force-locking manner against the surface parts of the side support surface (36) which are aligned differently in adaptation to the curvature or bevelling.

8. Shell end cutter according to any one of Claims 1 to 7, characterized in that the axial spacing between the screw bore (28) of the side support surface (36) has an undersize of 0.1 to 0.2 mm with respect to the relevant dimension on the cutting insert (24, 24').

9. Shell end cutter according to any one of Claims 1 to 8, characterized in that the cutting section (10) and the holder (12) are releasably and exchangeably connected to one another.

10. Shell end cutter according to any one of Claims 1 to 9, characterized in that the cutting section (10) comprises a face cutting section (14) arranged at the front and a cylindrical part (16, 16') arranged on the receiving side, which are releasably connected to one another.

11. Shell end cutter according to Claim 10, characterized in that the face cutting section (14) comprises two cutting inserts (24, 24') per cutting insert row.

12. Shell end cutter according to Claim 10 or 11, characterized in that the cylindrical part (16) comprises at least two and preferably three to six cutting inserts (24) per cutting insert row.

13. Shell end cutter according to Claim 10 or 11, characterized in that the cylindrical part (16') is in the form of an extension or reducer part preferably provided with terminating chip grooves (18).

14. Shell end cutter according to any one of Claims 9 to 13, characterized in that the cutting section (10) and the holder (12) are connected to one another in an interlocking and force-locking manner by coupling members.

15. Shell end cutter according to Claim 14, characterized in that an adapter (78, 78') for reciprocal adaptation of coupling members of different dimensions is disposed on the cutting section (10) and holder (12) between the latter.

16. Shell end cutter according to Claim 14 or 15, characterized in that the coupling members comprise at least two axially parallel follower pins (66, 68) which are at a defined angular spacing from each other on the one side and mating bores (70, 70'; 72, 72') for receiving the following pins (66, 68) on the other side.

17. Shell end cutter according to Claim 15 or 16, characterized in that the coupling members comprise a clamping screw (57) which extends through the cutting section (10) and engages in a taphole (56) in the holder (12).

18. Shell end cutter according to any one of Claims 15 to 17, characterized in that the coupling members comprise a centring pin (58, 60) axially projecting on one part and a mating bore (62, 64) disposed on the other part (16, 12) and receiving the centring pin (58, 60).

19. Shell end cutter according to Claim 15, characterized in that one part comprises at one end a transverse rib which projects over a plane surface, can be guided into a transverse groove, on the other part, delimited by a flat countersurface and can be clamped by clamping screws and a centring pin which can be inserted in a central mating hole in the other part and projects axially and centrally over the transverse rib.

20. Shell end cutter according to Claim 19, characterized in that conical recesses are arranged offset relative to one another in the longitudinal direction of the transverse rib in two opposite sides of the transverse rib, which sides are perpendicular relative to the plane surface, into each of which conical recesses can be screwed the conical tip of a screw, which is guided in a taphole of the other part and extends through the sides of the transverse groove, with such an axial offset that the two parts are axially urged against one another with their plane surfaces.

## Revendications

1. Fraise frontale cylindrique avec un élément de fixation (12), un élément de coupe (10) en forme de cylindre assemblé avec l'élément de fixation, deux rainures de serrage en spirale (18), au moins, disposées dans l'élément de coupe et mutuellement distantes dans le sens périphérique, et une rangée de sièges de plaquettes (20), disposés les uns derrière les autres le long d'un flanc des rainures de serrage, présentant respectivement une surface d'appui de fond (22), essentiellement dirigée dans le sens radial, et une surface d'appui latérale (36), délimitant dans le sens radial la surface précitée sur le côté du fond de la rainure, pour recevoir des plaquettes de coupe (24, 24') de profil essentiellement quadrangulaire, réalisées de préférence sous forme de plaquettes amovibles, et qui peuvent être fixées sur l'élément de coupe (10) au moyen d'une vis de serrage centrale (26), s'engageant dans un trou de vis (28) dans la zone de la surface d'appui de fond (22), en un agencement se chevauchant par paires dans le sens axial sur leurs extrémités tournées les unes vers les autres, ces plaquettes (24, 24') dépassant dans le sens radial du pourtour de l'élément de coupe (10) par un tranchant principal (30) et une face libre (32), située dans le prolongement de ce dernier, les plaquettes de coupe (24'), extrêmes côté frontal, de chaque rangée de plaquettes dépassant dans le sens axial de l'élément de coupe (10) par un tranchant frontal (42) et une face libre (44), située dans le prolongement de ce dernier, et les plaquettes de coupe internes (24) de chaque rangée de plaquettes, disposées derrière la plaquette extrême côté frontal (24'), dépassant dans le sens axial, sans contre-appui, du siège de plaquette (20) correspondant, par un tranchant actif (38) disposé côté fixation et une face libre (40), située dans le prolongement de ce dernier, caractérisée en ce que les plaquettes de coupe internes (24), par leur tranchant inactif (42) disposé côté frontal et une face libre (44), située dans le prolongement de ce dernier, s'engagent dans le sens axial, sans contre-appui, dans un dégagement (46) formé par une contre-dépouille du siège de plaquette adjacent, derrière la plaquette de coupe (24, 24') limitrophe côté frontal.

2. Fraise frontale cylindrique suivant la revendication 1, caractérisée en ce que la plaquette de coupe extrême (24') côté frontal de chaque rangée s'appuie sur un contre-appui axial (48), solidaire de l'élément de coupe, dans la zone de son tranchant (38) côté fixation et/ou de la face libre (40), située dans le prolongement de ce dernier.

3. Fraise frontale cylindrique suivant la revendication 2, caractérisée en ce que le contre-appui (48) est réalisé sous forme de goupille cylindrique (48), encastrée dans l'élément de coupe (10) et dépassant par une extrémité du fond de la rainure.

4. Fraise frontale cylindrique suivant l'une quelconque des revendications 1 à 3, caractérisée en ce que les surfaces d'appui de fond (22) des sièges de plaquettes (20) et les contre-dépouilles (46) de l'élément de coupe (10), situées dans le prolongement des surfaces précitées côté fixation, sont taillées en développante.

5. Fraise frontale cylindrique suivant l'une quelconque des revendications 1 à 4, caractérisée en ce que la surface d'appui de fond (22) de chaque siège de plaquette (20) et le tranchant principal (30) de la plaquette de coupe correspondante (24, 24') forment entre eux un angle aigu, convergent en direction de l'élément de fixation.

6. Fraise frontale cylindrique suivant l'une quelconque des revendications 1 à 5, caractérisée en ce que la surface d'appui latérale (36) est subdivisée en deux éléments superficiels, disposés à distance l'un de l'autre et définissant un appui en deux points.

7. Fraise frontale cylindrique suivant la revendication 6, caractérisée en ce que la face latérale (34), s'appliquant sur la surface d'appui latérale (36), et/ou la face libre de la plaquette de coupe (24, 24'), est légèrement incurvée ou tailiée à facettes, et est pressée par force d' adhérence et mécanique sur les éléments superficiels de la surface d'appui latérale (36), orientés différemment par adaptation à la courbure ou au taillage à facettes.

8. Fraise frontale cylindrique suivant l'une quelconque des revendications 1 à 7, caractérisée en ce que la distance axiale entre le trou de vis (28) et la surface d'appui latérale (36) présente un écart en moins de 0,1 à 0,2 mm par rapport à la cote correspondante sur la plaquette de coupe (24, 24').

9. Fraise frontale cylindrique suivant l'une quelconque des revendications 1 à 8, caractérisée en ce que l'élément de coupe (10) et l'élément de fixation (12) ont un assemblage mutuel amovible et interchangeable.

10. Fraise frontale cylindrique suivant l'une quelconque des revendications 1 à 9, caractérisée en ce que l'élément de coupe (10) se compose d'un élément de coupe en bout (14), disposé côté frontal, et d'un élément cylindrique (16, 16'), disposé côté fixation, ces deux éléments étant assemblés entre eux d'une manière amovible.

11. Fraise frontale cylindrique suivant la revendication 10, caractérisée en ce que l'élément de coupe en bout (14) présente deux plaquettes de coupe (24, 24') par rangée.

12. Fraise frontale cylindrique suivant l'une des revendications 10 ou 11, caractérisée en ce que l'élément cylindrique (16) présente au moins deux plaquettes de coupe (24), trois à six plaquettes de préférence, par rangée.

13. Fraise frontale cylindrique suivant l'une des revendications 10 ou 11, caractérisée en ce que l'élément cylindrique (16') est réalisé sous forme de prolongateur ou de réducteur sans tranchants, muni de préférence de rainures de serrage (18) de sortie.

14. Fraise frontale cylindrique suivant l'une quelconque des revendications 9 à 13, caractérisée en ce que l'élément de coupe (10) et l'élément de fixation (12) sont assemblés entre eux par des organes d'accouplement, par force d'adhérence et mécanique.

15. Fraise frontale cylindrique suivant la revendication 14, caractérisée en ce qu'un adaptateur (78, 78') est disposé entre l'élément de coupe (10) et l'élément de fixation (12), pour l'adaptation mutuelle d'organes d'accouplement de différentes dimensions aux éléments de coupe et de fixation (10, 12).

16. Fraise frontale cylindrique suivant l'une des revendications 14 ou 15, caractérisée en ce que les organes d'accouplement présentent au moins deux broches d'entraînement (66, 68) parallèles à l'axe et séparées par un distance angulaire mutuelle définie, d'une part, des trous d'ajustage (70, 70'; 72, 72') pour recevoir les broches d'entraînement (66, 68), d'autre part.

17. Fraise frontale cylindrique suivant l'une des revendications 15 ou 16, caractérisée en ce que les organes d'accouplement présentent une vis de serrage (57), qui traverse l'élément de coupe (10) et s'engage dans un trou taraudé (56) de l'élément de fixation (12).

18. Fraise frontale cylindrique suivant l'une quelconque des revendications 15 à 17, caractérisée en ce que les organes d'accouplement présentent une goupille de centrage (58, 60), en saillie axiale sur un élément, et un trou d'ajustage (62, 64), disposé sur l'autre élément (16, 12) et recevant la goupille de centrage (58, 60).

19. Fraise frontale cylindrique suivant la revendication 15, caractérisée en ce que l'un des éléments présente sur l'une de ses extrémités une nervure transversale, dépassant d'une surface plane, pouvant être introduite dans une rainure transversale de l'autre élément, délimitée par une contre-surface plane, et pouvant être bloquée au moyen de vis de serrage, ainsi qu'une goupille de centrage, qui peut être emmanchée dans un trou d'ajustage central de l'autre élément, et dépasse, d'une manière centrale et axiale, de la nervure transversale.

20. Fraise frontale cylindrique suivant la revendication 19, caractérisée en ce que des cavités coniques sont disposées en déport mutuel dans le sens longitudinal de la nervure transversale, dans deux flancs en vis-à-vis et perpendiculaires à la surface plane, de la nervure précitée, cavités dans lesquelles une vis, guidée dans un trou taraudé de l'autre élément et passant au travers des flancs de la rainure transversale, peut être vissée par une pointe conique avec un déport axial tel, que l'un et l'autre des éléments sont mutuellement pressés dans le sens axial par leurs surfaces planes.
